# EUROPÄISCHE PATENTSCHRIFT

(11) **EP 1 252 112 B1**
(45) Veröffentlichungstag und Bekanntmachung des Hinweises auf die Patenterteilung: **16.07.2003**
(21) Anmeldenummer: 01927799.5
(22) Anmeldetag: 24.03.2001
(51) Int. Cl.: C03B 33/04, C03B 33/09

(54) **VERFAHREN ZUM HERSTELLEN VON KLEINEN DÜNNGLASSCHEIBEN UND GRÖSSERE DÜNNGLASSCHEIBE ALS HALBFABRIKAT FÜR DIESES HERSTELLEN**
METHOD FOR PRODUCING SMALL, SHEET GLASS PLATES AND LARGER SHEET GLASS PLATES AS SEMI-FINISHED PRODUCTS FOR PRODUCING THE FORMER
PROCEDE DE FABRICATION DE PETITES PLAQUES DE VERRE MINCE ET PLAQUE DE VERRE MINCE PLUS GRANDE EN TANT QUE SEMI-PRODUIT POUR CETTE FABRICATION

(30) Priorität: 04.04.2000 DE 10016628
(43) Veröffentlichungstag der Anmeldung: 30.10.2002
(73) Patentinhaber: Schott Glas, 55122 Mainz (DE); Carl Zeiss Stiftung Trading as Schott Glaswerke, 55122 Mainz (DE)
(72) Erfinder: DIETZ, Christian, 55126 Mainz (DE); FÜRST, Robert, 85356 Freising (DE); HERMANNS, Christoph, 55130 Mainz (DE); OSTENDARP, Heinrich, 55128 Mainz (DE); MUND, Dietrich, 84101 Obersü bach (DE)
(74) Vertreter: Fuchs Mehler Weiss & Fritzsche
(86) Internationale Anmeldenummer: EP0103385
(87) Internationale Veröffentlichungsnummer: WO01074726

(56) Entgegenhaltungen:
- EP-A- 0 062 484
- EP-A- 0 872 303
- WO-A-99/46211
- DE-A- 3 400 843
- DE-C- 3 339 334
- US-A- 4 300 933
- US-A- 4 300 934

## Beschreibung

Die Erfindung betrifft ein Verfahren zum Herstellen von kleinen Dünnglasscheiben mit vorgegebener geometrischer Struktur und lateralen Ausdehnungen im Millimeterbereich durch Heraustrennen aus einer größeren Dünnglasscheibe.

Die Erfindung betrifft ferner eine solche größere Dünnglasscheibe mit Abmessungen im Zentimeterbereich als Halbfabrikat für das Herstellen der kleinen Dünnglasscheiben mit lateralen Ausdehnungen im Millimeterbereich.

Kleine Dünnglasscheiben der vorgenannten Art werden auf bestimmten Gebieten der Technik, insbesondere bei der Herstellung von elektronischen Bauelementen, benötigt.

So werden bei der Einhausung von mikro- und optoelektronischen Bauelementen, wie Schwingquarze, SAW-Filter, CCD-Bauelemente, dem sog. "Electronic Packaging", unter anderem kleine Behältnisse verwendet, die an mindestens einer Seite ganz oder teilweise durch eine Dünnglasscheibe abgeschlossen sind. Häufig werden bei der Einhausung von mikro- und optoelektronischen Bauelementen auch Gehäusedeckel aus Dünnglas verwendet. Die Dicke s dieser kleinen Dünnglasscheiben liegt dabei typischerweise im Bereich 10 µm ≤ s ≤ 500 µm. Hierbei kommen Dünnglasscheiben unterschiedlichster Geometrie (rechteckig, kreisrund, etc.) zum Einsatz. Die Kantenlänge bzw. Durchmesser derartiger Scheiben aus Dünnglas betragen typischerweise nur wenige Millimeter.

Kleine Dünnglasscheiben werden auch als Konstruktionsbauteile bei der Herstellung von mikroelektronischen und -mechanischen Bauteilen verwendet. So ist es beispielsweise aus der Patentschrift DE 196 49 332 bekannt, daß ein Schwingquarz direkt zwischen zwei Dünnglasscheiben positioniert und mit diesen verbunden wird. Derartige Verbundkonstruktionen weisen eine geringe Bauhöhe auf und bieten die Möglichkeit auf eine Platine oder Trägerplatte aufgebracht und kontaktiert zu werden.

Bei dieser Verwendung von Dünnglas als Verschlusselement einer Einhausung von mikro- und optoelektronischen Bauteilen sowie als Konstruktionselement von mikroelektronischen oder -mechanischen Bauteilen erfolgt die Verbindungsbildung typischerweise durch eine Klebung oder Lötung. Im Falle der Lötung werden Metall- oder Glaslote als Fügematerial verwendet. In der überwiegenden Anzahl der Anwendungsfälle kommen dabei Glaslote zum Einsatz.

Die Herstellung derartiger, kleiner Dünnglasscheiben erfolgt gemäß dem Stand der Technik (Derweut-Abstract zu JP 62-070241) typischerweise durch das Heraustrennen aus größeren Dünnglasscheiben. Der Trennvorgang erfolgt dabei durch Trennschleifen oder Bohren mittels rotierenden Diamantwerkzeugen. An die Kantenqualität werden dabei erhöhte Anforderungen gestellt, da diese entscheidenden Einfluß auf die Festigkeit der Dünnglasscheibe hat.

Typischerweise werden die Dünnglasscheiben zunächst auf die zuvor beschriebene Weise zerteilt und dann den nachfolgenden Weiterverarbeitungsschritten (Montage- und Fügeprozeß) zugeführt. Bei der derzeit in vielen Anwendungsfällen bei der Einhausung angewandten Fügetechnik werden die Dünnglasscheiben durch einen Lötprozeß mit dem Gehäuse verbunden. In der Mehrzahl der Anwendungsfälle wird der Lotwerkstoff dahei mittels eines Dispensers auf das Glas aufgebracht.

Typischerweise wird der Lotwerkstoff im Randbereich der Dünnglasscheiben aufgebracht und bildet daher in der Regel eine dünne, geschlossene, rahmenförmige Kontur. Üblicherweise werden dabei Glas- oder Metallote verwendet. Eine andere, in der Praxis teilweise auch angewandte, Möglichkeit den Lotwerkstoff in die Fügezone einzubringen, besteht in der Anwendung vorgesinterter Lotrahmen. Hierzu müssen die Dünnglasscheiben und ein freier, ebenfalls sehr dünner, vorgesinterter Lotrahmen aus Glaslot relativ zueinander und auch relativ zum Gehäuse, mit dem die Dünnglasscheiben verbunden werden sollen, positioniert und teilweise fixiert werden.

Bei dieser Weiterverarbeitung ergeben sich aufgrund der geringen lateralen Ausdehnung, Dicke und Masse der Dünnglasscheiben, sowie der verwendeten Lotrahmen Probleme bei der Handhabung und Positionierung. Diese Handhabungsproblematik tritt insbesondere bei der Verwendung von dünnen, freien Lotrahmen in verstärktem Maße auf. Einerseits sind die Dünnglasscheiben vergleichsweise bruchanfällig und andererseits ist das Verhältnis von Schwerkraft zu den bei der Handhabung auftretenden Adhäsionskräften gering. Speziell die definierte Aufnahme der einzelnen Dünnglasscheiben und der Lotrahmen ist schwierig, so daß in der überwiegenden Anzahl der Anwendungsfälle nur eine manuelle Handhabung der einzelnen Bauteile möglich ist. Diese manuelle Handhabung ist zeit-, personal- und daher kostenintensiv. Darüber hinaus treten bei einer derartigen Handhabung und beim Transport der einzelnen Dünnglasscheiben ein erhöhter Ausschuß aufgrund von Bruch und Verschmutzung ein.

Der Erfindung liegt die Aufgabe zugrunde, das eingangs bezeichnete Verfahren zum Herstellen von kleinen Dünnglasscheiben mit vorgegebener geometrischer Struktur und lateralen Ausdehnungen im Millimeterbereich durch Heraustrennen aus einer größeren Dünnglasscheibe so zu führen sowie eine solche größere Dünnglasscheibe als Halbfabrikat für das Herstellen der kleinen Dünnglasscheiben so auszubilden, daß der Transport der kleinen Scheiben vereinfacht wird. eine rationellere Fertigungsfolge der einzelnen kleinen Scheiben gegeben ist und daß die Handhabung, insbesondere die Positionierung der einzelnen Dünnglasscheiben unmittelbar vor dem Fügeprozeß vereinfacht wird und besser automatisierbar ist.

Hinsichtlich des Verfahrens gelingt die Lösung der Aufgabe gemäß der Erfindung mit den Schritten:
- Bedrucken der größeren Dünnglasscheibe auf der einen Seite mit einem Fügematerial entsprechend der Fügezonengeometrie der herauszutrennenden kleinen Dünnglasscheiben unter Vorgabe von Solltrennlinien und
- Vereinzeln der kleinen Dünnglasscheiben mit dem aufgedruckten Fügematerial durch anschließendes Trennen entlang der Soll-Trennlinien.

Vorzugsweise erfolgt dabei gemäß einer Weiterbildung der Erfindung vor dem Vereinzeln ein Ritzen der größeren Dünnglasscheibe entlang der Soll-Trennlinien mittels eines Laserstrahles in einer vorgegebenen Tiefe.

Hinsichtlich der größeren Dünnglasscheibe mit lateralen Abmessungen im Zentimeterbereich als Halbfabrikat zum Herstellen von kleinen Dünnglasscheiben mit vorgegebener geometrischer Struktur und lateralen Abmessungen im Millimeterbereich gelingt die Lösung der Aufgabe erfindungsgemäß dadurch, daß die größere Dünnglasscheibe auf der einen Seite mit einem Fügematerial entsprechend der Fügezonengeometrie der herauszutrennenden kleinen Dünnglasscheiben unter Vorgabe von Soll-Trennlinien versehen und vorzugsweise entlang den Soll-Trennlinien bis in eine vorgegebene Tiefe geritzt ist.

Das Wesen der Erfindung besteht daher in der Herstellung einer größeren, entsprechend der Geometrie der kleinen Dünnglasscheiben strukturierten Dünnglassubstratscheibe. die erst unmittelbar vor dem Fügeprozeß in einzelne kleine Dünnglasscheiben vereinzelt wird. Eine derartige, zunächst noch zusammenhängende größere Dünnglasscheibe kann sich dadurch auszeichnen, daß der Fügezusatzwerkstoff bereits auf die Glassubstratoberseite aufgebracht und fest mit dem Glassubstrat verbunden ist. Weiterhin ist eine derartige, große Dünnglasscheibe entsprechend der Geometrie der kleineren Dünnglasscheiben vorzugsweise mit einer Rißstruktur an der Unterseite versehen, die es erlaubt, die Dünnglasscheibe durch einfaches mechanisches Brechen unmittelbar vor dem Fügeprozeß in geometrisch definierte Einzelscheiben mit hoher Kantenqualität zu vereinzeln. Ebenso kann das Vereinzeln durch thermisch induzierte, lokal wirkende mechnische Spannungen, beispielsweise durch partielle Laserbestrahlung, erfolgen.

Die Vorteile der Erfindung liegen in einem vereinfachten Transport der Scheiben und insbesondere in einer rationelleren Fertigungsfolge der einzelnen kleinen Dünnglasscheiben sowie der Möglichkeit, die Handhabung bzw. Positionierung der kleinen Dünnglasscheiben unmittelbar vor dem Fügeprozeß zu vereinfachen und besser automatisieren zu können.

Eine andere Möglichkeit zur Verbesserung des Herstell- bzw. Verschlußprozesses von elektronischen Bauteilen mit dünnen Glasscheiben besteht darin, zunächst die gesamte(n) strukturierte Dünnglasscheibe(n) mit der entsprechenden Zahl zugehöriger Gehäusebauteile zu Fügen (Verlöten) und erst nach diesem Fügeprozeß durch mechanisches Brechen zu vereinzeln. Ebenso könnte das Vereinzeln (Brechen) nicht rein mechanisch, sondern auch hier durch thermisch induzierte, lokal wirkende, mechanische Spannungen, beispielsweise durch partielle Laserbestrahlung, erfolgen.

Das Fügen der einzelnen kleinen Dünnglasscheiben an andere Komponenten. insbesondere mit dem Rand flächiger Komponenten, wird mit Vorteil erleichtert, wenn eine rahmenartige Struktur des rügematcrials aufgedruckt wird, die eine vorgegebene Rahmenbreite besitzt und peripher entlang den Soll-Trennlinien auf den herauszutrennenden kleinen Dünnglasscheiben verläuft.

Das Bedrucken der größeren Dünnglasscheibe mit dem Fügematerial erfolgt mit Vorteil mittels Siebdruck, der eine wirtschaftliche und wirksame Herstellung der entsprechenden geometrischen Struktur gewährleistet. Auch andere Drucktechniken sind prinzipiell anwendbar, beispielsweise der Schablonendruck.

Als Fügematerial wird vorzugsweise Glaslot verwendet, das gut mittels der üblichen Drucktechniken, insbesondere dem Siebdruck, verarbeitbar ist, und das gut auf den Dünnglasscheiben haftet.

Als Glasmaterial für die Dünnglasscheiben eignet sich im besonderen Masse gezogenes Borosilikatglas, das die notwendigen mechanischen und chemischen Eigenschaften bei der Anwendung der kleinen Dünnglasscheiben besitzt.

Besondere Handhabungs-Vorteile bei der Herstellung der einzelnen kleinen Dünnglasscheiben werden erzielt, wenn gemäß einer Weiterbildung der Erfindung die bedruckte und geritzte größere Dünnglasscheibe auf ein Trägermaterial, vorzugsweise eine Kunststoff-Trägerfolie aufgebracht wird, die vorzugsweise mechanisch verspannt wird. Dadurch ist auch eine Weiterbildung der Erfindung möglich, bei der die bedruckte, größere Dünnglasscheibe ungeritzt auf das Trägermaterial aufgebracht wird und mittels eines Trennschleif-Prozesses in die kleinen Dünnglasscheiben zerteilt wird.

Weitere Ausgestaltungen der Erfindung ergeben sich anhand der Beschreibung von zwei in den Zeichnungen dargestellten Ausführungsbeispielen.

Es zeigen:
- Figur 1: in einer Draufsicht-Darstellung ein erstes Ausführungsbeispiel einer erfindungsgemäß strukturierten und geritzten größeren Dünnglasscheibe, die als Halbfabrikat für die Herstellung von kleineren, rechteckigen Dünnglasscheiben dient,
- Figur 2: eine Querschnittsdarstellung entlang der Schnittlinie A-A in Figur 1, und
- Figur 3: eine Draufsichtdarstellung einer weiteren Ausführungsform der erfindungsgemäß ausgebildeten Halbfabrikat-Dünnglasscheibe mit Sechseckstruturen.

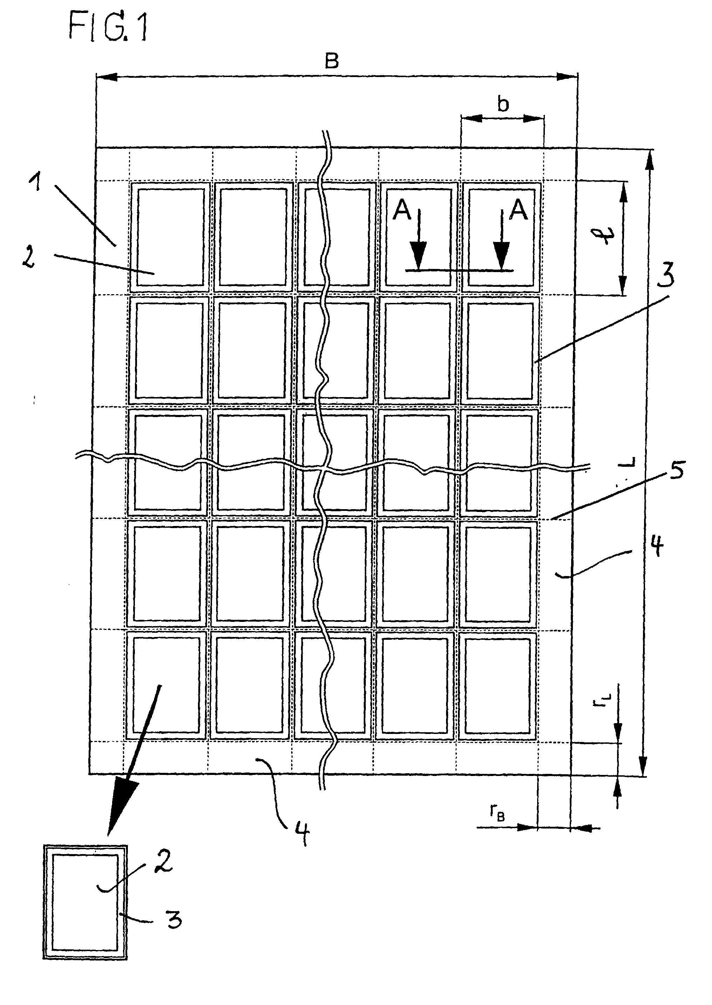

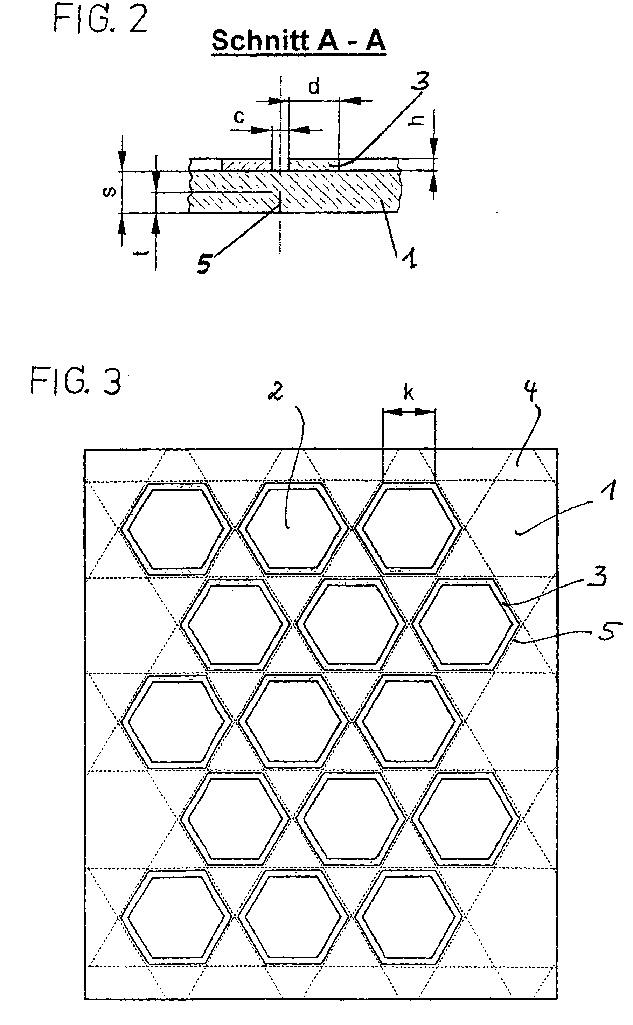

Die Figur 1 in Verbindung mit der Querschnittsdarstellung nach Figur 2 zeigt eine erfindungsgemäß strukturierte größere Dünnglasscheibe 1 am Beispiel einer Rechleckgeometrie. Diese Dünnglasscheibe 1 besitzt die Kantenlängen B und L, die im Bereich mehrerer Zentimetern liegen.

Die vorgenannte größere Dünnglasscheibe 1 ist entsprechend der Geometrie der abzutrennenden, d.h. zu vereinzelnden kleineren Dünnglasscheiben 2, von denen eine als Ausschnitt im abgetrennten Zustand herausgezogen ist, in kleinere, ebenfalls rechteckige Segmente mit den Kantenlängen b und 1 unterteilt. Diese Kantenlängen der kleineren Dünnglasscheiben 2 liegen im Bereich von wenigen Millimeter. Jedes, die jeweilige spätere kleine Dünnglasscheibe 2 bildende Segment besitzt einen im Randbereich aufgebrachten Lotrahmen 3 aus Glaslot, der entsprechend der späteren Fügezonengeometrie, in diesem Beispiel ebenfalls rechteckig, ausgebildet ist.

Die sich dadurch auf der Oberseite der Dünnglasscheibe 1 bildenden Lotrahmenstrukturen 3 aus Glaslot werden mittels Sieb- oder Schablonendruck in einem oder mehreren Arbeitsgängen aufgebracht. Die typische Lotrahmenbreite "d" (Fig. 2) liegt im Bereich 300 µm ≤ d ≤ 900 µm. Die Dicke "h" der aufgedruckten Lotrahmenstrukturen 3 liegt typischerweise im Bereich 15 µm ≤ h ≤ 200 µm. Der Abstand "c" der Lotrahmen 3 untereinander liegt typischerweise im Bereich 0 µm ≤ c < 500 µm.

Die große Dünnglasscheibe 1 verfügt dabei über einen nicht mit Lotmaterial beschichteten umlaufenden Rand 4. Die Randbreiten (r_{B}r_{L}) liegen typischerweise im Bereich von mehreren Millimetern.

Die Unterteilung der Dünnglasscheibe 1 in die kleineren Segmente, d.h. die kleineren Dünnglasscheiben 2, erfolgt anhand einer rückseitig eingebrachten Rißstruktur 5, die gestrichelt dargestellt ist. Die Risse gehen von der Oberfläche der Unterseite der größeren Dünnglasscheibe 1 aus und haben eine Tiefe t, die kleiner als die Dicke s des Glassubstrates ist (Fig. 2).

Die rückseitig eingebrachten, in ihrem Verlauf und Tiefe definierten Risse 5 werden vorzugsweise durch thermisch induzierte Spannungen aufgrund von Laserbestrahlung eingebracht. Diese Risse verlaufen vorzugsweise geradlinig über die gesamte größere Dünnglasscheibe 1.

Derartige Laserstrahl-Ritzverfahren, die durch eine lokale Erwärmung durch den fokussierten Laserstrahl in Verbindung mit einer Kühlung von außen, eine thermomechanische Spannung bis über die Bruchfestigkeit des Werkstoffes in einer vorbestimmten Tiefe induzieren, sind durch mehrere Schriften bekannt geworden, beispielsweise durch die EP 0 872 303 A2. die DE 693 04 194 T2 und die DE 43 05 107 C2.

Die vorgenannten Laserstrahl-Ritzverfahren unterscheiden sich insbesondere durch die Konfiguration des Brennfleckes. So nutzt das Verfahren nach der DE 693 04 194 T2 einen Laserstrahl mit elliptischem Querschnitt mit nachlaufendem Kühlspot.

Die EP 0 872 303 A2 beschreibt ein Laserstrahl-Ritzverfahren, das einen Brennfleck mit einer U- bzw. V-förmigen Kontur vorsieht, die sich in der Trennrichtung öffnet. Auch davon abgewandelte Konturen, wie X-förmige Brennflecke, werden beschrieben.

Durch die DE 43 05 107 C2 ist ein Laserstrahl-Ritzverfahren bekannt geworden, bei dem der Laserstrahl so geformt ist, daß sein Strahlquerschnitt auf der Oberfläche des Werkstückes eine linienförmige Form aufweist, bei dem das Verhältnis von Länge und Breite des auftreffenden Strahlquerschnittes einstellbar ist.

Durch die ältere Patentanmeldung 198 30 237.1-45 gehört es auch zum Stand der Technik, einen punktförmigen Brennfleck mit einer dazu konzentrischen Kühlzone zu erzeugen.

Durch die ältere Patentanmeldung 199 59 921.1 gehören auch spezielle linienförmige Schneidflecke mit Intensitätsmaxima an ihren Enden zum Stand der Technik.

Sämtliche dieser Brennflecke können im Rahmen der Erfindung zum Ritzen der größeren Dünnglasscheibe 1 angewendet werden.

Aufgrund der verfahrensspezifischen Vorteile beim Laserstrahlritzen treten nach dem Auseinanderbrechen der größeren Dünnglasscheibe 1 keine unzulässig hohen Kantenschädigungen an den kleinen Dünnglasscheiben 2 auf. so daß eine abtragende Nachbearbeitung der Kanten nicht erforderlich ist.

Als Glaswerkstoff für die Dünnglasscheibe 1 findet neben anderen Glaswerkstoffen, vorzugsweise gezogenes Borosilikatglas der Fa. SCHOTT DESAG vom Typ D263 oder AF45 im Dickenhereich 100 µm ≤ s ≤ 500 µm Verwendung.

Eine auf vorstehend beschriebene Weise strukturierte Dünnglasscheibe 1 kann vergleichsweise einfach gehandhabt und durch einfaches mechanisches Brechen zu kleinen Einzelscheiben 2 vereinzelt werden.

Neben der in Figur 1 gezeigten rechteckigen Struktur der kleinen Dünnglasscheiben 2 können auch eine Polygonstruktur gemäß Figur 3 bzw. abgerundete Strukturen (beispielsweise Kreiskontur) zur Anwendung kommen. In diesen Fällen liegen die Kantenlänge k bzw. die Durchmesser der kleinen Dünnglasscheiben ebenfalls im Bereich weniger Millimeter. Im Falle runder Strukturen ist der Rißverlauf 5 nicht geradlinig, sondern der Konturgeometrie der Strukturen angepaßt . Auch die Form der größeren Dünnglasscheibe 1 muß nicht zwingend rechteckig sein. Es können ebenfalls mehreckige oder runde bzw. teilweise runde Scheiben (Wafer) Verwendung finden.

Ebenfalls ist es möglich, die bedruckte und geritzte größere Dünnglasscheibe 1 auf eine Kunststoff-Trägerfolie oder ein anderes Trägermaterial aufzubringen. Durch ein Spannen (Dehnen) der Trägerfolie über einen dafür geeigneten Rahmen können Zugkräfte in die Trägerfolie und damit auch in die größere Dünnglasscheibe 1 eingeleitet werden, die zu einem Auseinanderbrechen entlang der Rißverläufe 5 und somit zum Vereinzeln der größeren Dünnglasscheibe 1 führt. Die dabei entstehenden kleinen Dünnglasscheiben haften auf der Trägerfolie, haben eine definierte Position und können daher automatisiert abgegriffen und abgelegt werden.

Wird eine Kunststoffolie oder ein anderes Trägermaterial zur Halterung/Fixierung benutzt, so besteht auch die Möglichkeit, die Dünnglasscheibe nicht mittels Laserstrahlbearbeitung zu ritzen und anschließend durch mechanische Kraftleitung zu zerteilen, sondern das Zerteilen unmittelbar mittels Trennschleifen entlang der dafür vorgesehenen Trennlinien durchzuführen. Der Abstand der Lotrahmen c auf der Substratglasscheibe liegt dann im Bereich der Dicke des Trennwerkzeugs bzw. der erzeugten Schnittfugenbreite. Die typische Schnittfugenbreite beträgt mehrere 0,1 mm.

## Patentansprüche

1. Verfahren zum Herstellen von kleinen Dünnglasscheiben (2) mit vorgegebener geometrischer Struktur und lateralen Ausdehnungen im Millimeterbereich durch Heraustrennen aus einer größeren Dünnglasscheibe (1), mit den Schritten:
- Bedrucken der größeren Dünnglasscheibe auf der einen Seite mit einem Fügematerial entsprechend der Fügezonengeometrie der herauszutrennenden kleinen Dünnglasscheiben, unter Vorgabe von Soll-Trennlinien, und
- Vereinzeln der kleinen Dünnglasscheiben mit dem aufgedruckten Fügematerial durch anschließendes Trennen entlang den Soll-Trennlinien (5).

2. Verfahren nach Anspruch 1, **dadurch gekennzeichnet, daß** vor dem Vereinzeln ein Ritzen der größeren Dünnglasscheibe entlang der Soll-Trennlinien mittels eines Laserstrahles in einer vorgegebenen Tiefe erfolgt.

3. Verfahren nach Anspruch 1 oder 2, **dadurch gekennzeichnet. daß** das Vereinzeln der kleinen Dünnglasscheiben durch mechanisches Abbrechen erfolgt.

4. Verfahren nach Anspruch 1 oder 2, **dadurch gekennzeichnet, daß** das Vereinzeln der kleinen Dünnglasscheiben durch thermisch induzierte, lokal wirkende, mechanische Spannungen, beispielsweise durch partielle Laserbestrahlung, erfolgt.

5. Verfahren nach einem der Ansprüche 1 bis 4, **dadurch gekennzeichnet, daß** eine rahmenartige Struktur des Fügematerials aufgedruckt wird, die eine vorgegebene Rahmenbreit besitzt und peripher entland den Soll-Trennlinien auf den herauszutrennenden kleinen Dünnglasscheiben verläuft.

6. Verfahren nach einem der Ansprüche 1 bis 5, **dadurch gekennzeichnet, daß** das Aufdrucken mittels Siebdruck oder Schablonendruck erfolgt.

7. Verfahren nach einem der Ansprüche 1 bis 6, **dadurch gekennzeichnet, daß** als Fügematerial Glaslot verwendet wird.

8. Verfahren nach einem der Ansprüche 1 bis 7, **dadurch gekennzeichnet, daß** als Glasmaterial für die größere Dünnglasscheibe gezogenes Borosilikatglas verwendet wird.

9. Verfahren nach einem der Ansprüche 1 bis 8, **dadurch gekennzeichnet, daß** die bedruckte größere Dünnglasscheibe auf ein Trägermaterial aufgebracht wird.

10. Verfahren nach Anspruch 9, **dadurch gekennzeichnet, daß** als Trägermaterial eine Kunststoff-Trägerfolie verwendet wird, die mechanisch verspannt wird.

11. Verfahren nach Anspruch 9 oder 10, **dadurch gekennzeichnet, daß** die bedruckte, größere Dünnglasscheibe ungeritzt auf das Trägermaterial aufgebracht wird und mittels eines Trennschleif-Prozesses in die kleinen Dünnglasscheiben zerteilt wird.

12. Größere Dünnglasscheibe (1) mit laterialen Abmessungen im Zentimeterbereich als Halbfabrikat zum Herstellen von kleinen Dünnglasscheiben (2) mit vorgegebener geometrischer Struktur und lateralen Ausdehnungen im Millimeterbereich,
**dadurch gekennzeichnet, daß**
die größere Dünnglasscheibe (1) auf der einen Seite mit einem Fügematerial entsprechend der Fügezonengeometrie der herauszutrennenden kleinen Dünnglasscheiben (2) unter Vorgabe von Soll-Trennlinien (5) versehen ist.

13. Größere Dünnglasscheibe nach Anspruch 12, **dadurch gekennzeichnet, daß** sie entlang den Soll-Trennlinien (5) bis in eine vorgegebene Tiefe geritzt ist.

14. Größere Dünnglasscheibe nach Anspruch 12 oder 13, **dadurch gekennzeichnet, daß** sie auf einem Trägermaterial aufgebracht ist.

15. Größere Dünnglasscheibe nach Anspruch 14, **dadurch gekennzeichnet, daß** das Trägermaterial eine unter mechanischer Spannung stehende Kunststoffträgerfolie ist.

16. Größere Dünnglasscheibe nach einem der Ansprüche 12 bis 15, **dadurch gekennzeichnet, daß** die Fügezonengeometrie als Rahmen (3) ausgebildet ist und peripher entlang den Soll-Trennlinien (5) auf den herauszutrennenden kleinen Dünnglasscheiben (2) verläuft.

17. Größere Dünnglasscheibe nach Anspruch 12 oder 14 bis 16, **dadurch gekennzeichnet, daß** sie nicht geritzt ist.

## Claims

1. Method for producing small sheet glass plates (2) having a predetermined geometric structure and lateral extents in the millimetre range by separating them from a larger sheet glass plate (1), comprising the steps of:
- imprinting a joining material corresponding to the. joining zone geometry of the small sheet glass plates to be separated onto one side of the larger sheet glass plate, so as to predetermine desired separating lines, and
- dividing the small sheet glass plates with the imprinted joining material by subsequent separation along the desired separating lines (5).

2. Method according to Claim 1, **characterized in that**, before the dividing operation, the larger sheet glass plate is scored to a predetermined depth along the desired separating lines by means of a laser beam.

3. Method according to Claim 1 or 2, **characterized in that** the dividing of the small sheet glass plates is carried out by mechanically breaking them off.

4. Method according to Claim 1 or 2, **characterized in that** the dividing of the small sheet glass plates is effected by thermally induced, locally acting mechanical stresses, for example by partial laser irradiation.

5. Method according to one of Claims 1 to 4, **characterized in that** a frame-like structure of the joining material is printed, this structure having a predetermined frame width and running peripherally along the desired separating lines on the small sheet glass plates which are to be separated.

6. Method according to one of Claims 1 to 5, **characterized in that** the printing is effected by means of screen printing or stencil printing.

7. Method according to one of Claims 1 to 6, **characterized in that** soldering glass is used as the joining material.

8. Method according to one of Claims 1 to 7, **characterized in that** drawn borosilicate glass is used as glass material for the larger sheet glass plate.

9. Method according to one of Claims 1 to 8, **characterized in that** the imprinted larger sheet glass plate is placed onto a carrier material.

10. Method according to Claim 9, **characterized in that** the carrier material used is a plastic carrier film which is mechanically tensioned.

11. Method according to Claim 9 or 10, **characterized in that** the imprinted, larger sheet glass plate is placed onto the carrier material in unscored form and is divided into the small sheet glass plates by means of an abrasive cutting process.

12. Larger sheet glass plate (1) having lateral dimensions in the centimetre range as a semifinished product for producing small sheet glass plates (2) having a predetermined geometric structure and lateral extents in the millimetre range, **characterized in that** the larger sheet glass plate (1) is provided on one side with a joining material which corresponds to the joining zone geometry of the small sheet glass plates (2) which are to be separated, with desired separating lines (5) being predetermined.

13. Larger sheet glass plate according to Claim 12, **characterized in that** it is scored to a predetermined depth along the desired separating lines (5).

14. Larger sheet glass plate according to Claim 12 or 13, **characterized in that** it is placed on a carrier material.

15. Larger sheet glass plate according to Claim 14, **characterized in that** the carrier material is a plastic carrier film which is under mechanical stress.

16. Larger sheet glass plate according to one of Claims 12 to 15, **characterized in that** the joining zone geometry is formed as a frame (3) and runs peripherally along the desired separating lines (5) on the small sheet glass plates (2) which are to be separated.

17. Larger sheet glass plate according to Claim 12 or 14 to 16, **characterized in that** it is not scored.

## Revendications

1. Procédé pour la fabrication de petites vitres (2) en verre mince à structure géométrique prédéterminée et prolongements latéraux dans la plage millimétrique, par découpe d'une plus grande vitre (1) en verre mince, comportant les étapes qui consistent à:
- imprimer sur un côté de la plus grande vitre en verre mince un matériau de joint qui correspond à la géométrie des zones de joint des petites vitres en verre mince à découper, pour définir des lignes de future découpe, et
- découper chacune des petites vitres en verre mince sur lesquelles le matériau de joint est imprimé, par découpe le long des lignes (5) de future découpe.

2. Procédé selon la revendication 1, **caractérisé en ce qu'**avant la découpe, on réalise au moyen d'un rayon laser et à une profondeur prédéterminée une rainure dans la plus grande vitre en verre mince le long des lignes de future découpe.

3. Procédé selon la revendication 1 ou 2, **caractérisé en ce que** la découpe des petites vitres en verre mince s'effectue par rupture mécanique.

4. Procédé selon la revendication 1 ou 2, **caractérisé en ce que** la découpe des petites vitres en verre mince s'effectue par contraintes mécaniques induites thermiquement et agissant localement, par exemple par irradiation partielle au laser.

5. Procédé selon l'une des revendications 1 à 4, **caractérisé en ce que** le matériau de joint est imprimé dans une structure en forme de cadre qui possède une largeur de cadre prédéterminée et qui s'étend périphériquement le long des lignes de future rupture sur les petites vitres en verre mince qui doivent être découpées.

6. Procédé selon l'une des revendications 1 à 5, **caractérisé en ce que** l'impression s'effectue par sérigraphie ou au pochoir.

7. Procédé selon l'une des revendications 1 à 6, **caractérisé en ce que** l'on utilise du verre pour soudure comme matériau de joint.

8. Procédé selon l'une des revendications 1 à 7, **caractérisé en ce que** l'on utilise du verre au borosilicate étiré comme matériau de verre pour la plus grande vitre en verre mince.

9. Procédé selon l'une des revendications 1 à 8, **caractérisé en ce que** la plus grande vitre en verre mince imprimée est appliquée sur un matériau de support.

10. Procédé selon la revendication 9, **caractérisé en ce que** comme matériau de support, on utilise une feuille de support en matière synthétique qui est tendue mécaniquement.

11. Procédé selon la revendication 9 ou 10, **caractérisé en ce que** la plus grande vitre en verre mince imprimée est placée sans être rainurée sur le matériau de support et est divisée en les petites vitres en verre mince par une opération de découpe par meulage.

12. Grande vitre (1) en verre mince dont les dimensions latérales sont dans la plage centimétrique, comme produit semi-fini pour la fabrication de petites vitres (2) en verre mince à structure géométrique prédéterminée et extensions latérales dans la plage millimétrique, **caractérisée en ce que**
la grande vitre (1) en verre mince est dotée d'un côté d'un matériau de joint qui correspond à la géométrie des zones de joint des petites vitres (2) en verre mince à découper, en définissant des lignes (5) de future découpe.

13. Grande vitre en verre mince selon la revendication 12, **caractérisée en ce qu'**elle est rainurée jusqu'à une profondeur prédéterminée le long des lignes (5) de future découpe.

14. Grande vitre en verre mince selon la revendication 12 ou 13, **caractérisée en ce qu'**elle est placée sur un matériau de support.

15. Grande vitre en verre mince selon la revendication 14, **caractérisée en ce que** le matériau de support est une feuille de support en matière synthétique placée sous une contrainte mécanique.

16. Grande vitre en verre mince selon l'une des revendications 12 à 15, **caractérisée en ce que** la géométrie des zones de joint est configurée en cadre (3) et s'étend périphériquement le long des lignes (5) de future découpe sur les petites vitres (2) en verre mince à découper.

17. Grande vitre en verre mince selon les revendications 12 ou 14 à 16, **caractérisée en ce qu'**elle n'est pas rainurée.
